# EUROPEAN PATENT SPECIFICATION

(11) **EP 2 735 802 B1**
(45) Date of publication and mention of the grant of the patent: **30.08.2017**
(21) Application number: 12840394.6
(22) Date of filing: 10.10.2012
(51) Int. Cl.: F24C 7/02, F24C 15/00, G05B 9/02, F24C 7/08, G05B 19/042, H05B 6/66

(54) **HEAT COOKING DEVICE**
KOCHVORRICHTUNG
DISPOSITIF DE CUISSON

(30) Priority: 13.10.2011 JP 2011225582
(43) Date of publication of application: 28.05.2014
(73) Proprietor: Panasonic Corporation, Osaka 571-8501 (JP)
(72) Inventor: NAKASHITA, Kiyoshi, Chuo-ku Osaka 540-6207 (JP)
(74) Representative: Schwabe - Sandmair - Marx
(86) International application number: PCT/JP2012/006506
(87) International publication number: WO 2013/054517

(56) References cited:
- JP-A- 2010 210 226
- JP-A- 2011 133 184
- JP-A- 2011 149 610
- JP-A- 2011 149 610
- US-B1- 7 047 440

## Description

### Technical Field

The present invention relates to a heat cooking device using a microcomputer.

### Background Art

In general, a high-frequency heat cooking device (a heat cooking device) with an oven controls a plurality of heating sources, for example, a heater and a microwave oven.

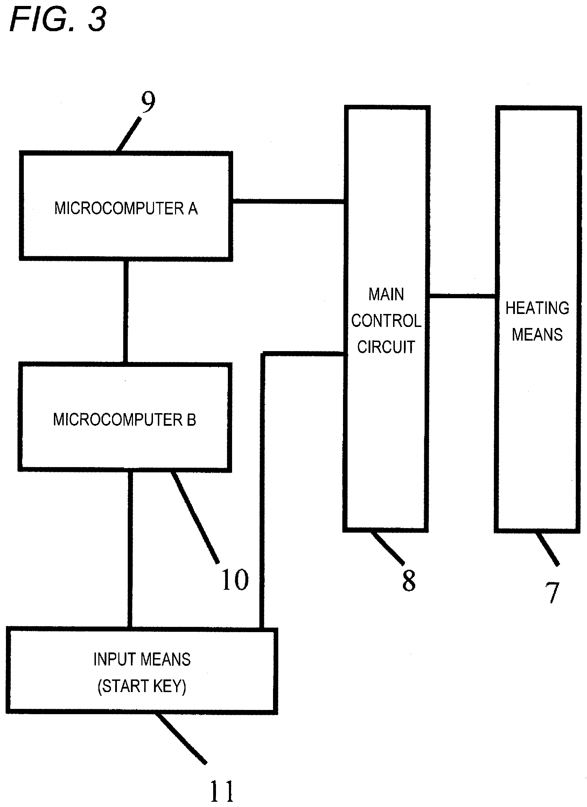

In a heat cooking device according to the related art as shown in Fig. 3 showing a configuration diagram, a START key as a part of input means 11 is connected to a main control circuit 8, and an active signal is sent to the main control circuit 8 while the START key is pressed down. In the heat cooking device according to the related art, a microcomputer A is connected to the main control circuit 8, and the active signal is sent to the main control circuit 8 through the microcomputer A when heating means 7 (for example, a heater or a microwave oven) is to be turned ON.

If the START key is pressed down and the active signal is sent when the active signal is sent through the microcomputer A, a latch circuit forming a part of the main control circuit 8 is turned ON. In this state, even if the START key is released so that the signal becomes non-active, the latch circuit is continuously ON as long as the active signal of the microcomputer A is ON.

In order to turn ON heating means 7 (for example, a heater), by turning ON a relay of the heating means 7 (for example, the heater) by the microcomputer A in a state in which the latch circuit is ON, whereby the heating means 7 (for example, the heater) is turned ON.

With the configuration, the above-described control of the heating means 7 (for example, the heater) can prevent a dangerous state since the heating means 7 (for example, a heater or a microwave oven) is not turned ON as long as the latch circuit is not ON even in case of receipt of an input indicating pressing down the START key due to a keyboard short-circuit state or a noise in association with a failure of the input means 11.

### Related Art Documents

### Patent Documents

Patent Document 1: JP-A-63-189715
Patent Document 2: JP-A-60-264088

JP 2010-210226 A discloses a heat cooking device according to the preamble of claim 1.

### Summary of the Invention

### Problem to be Solved by the Invention

However, in the configuration according to the related art, there is the following problem. Particularly, in the case in which the input means uses a touchscreen, the START key does not physically exist, whereby a single line cannot be connected, therefore a signal cannot be sent from the START key.

The present invention has been made to solve the problem of the related art, and an object thereof is to provide a heat cooking device in which, instead of sending a signal from the START key, a watchdog IC is prepared, and information indicating that a START key displayed on a touchscreen is pressed down is transmitted by communication in a state in which cooking can be started, and when the watchdog IC receives the information, an active signal is sent.

### Means for Solving the Problem

In order to solve the problem of the related art, there is provided a heat cooking device according to the invention including: a heating chamber for accommodating an object to be heated; an opening/closing door provided on the heating chamber; heating means for heating the object to be heated in the heating chamber; a main control circuit for controlling the heating means; a first microcomputer for supplying an active signal to the main control circuit; input means for setting of cooking; a second microcomputer for receiving data from the input means; a communication line which connects the first microcomputer and the second microcomputer so as to allow communication therebetween; and an IC circuit unit connected to the communication line, wherein when data indicating start of cooking is transmitted to the first microcomputer and the IC circuit unit by using the communication line through the second microcomputer, the main control circuit is turned ON based on a logical conjunction of an active signal output from the IC circuit unit AND an active signal output from the first microcomputer.

With the configuration, in which a touchscreen is used as an input means and a display unit, a latch circuit is not turned ON even if the active signal is output from only one component due to a failure of the IC circuit unit (watchdog IC) or a failure of the first microcomputer (a microcomputer A). For this reason, a heater or a microwave oven is not turned ON so that a dangerous state can be prevented.

### Advantages of the Invention

In the heat cooking device according to the invention, in the case in which a touchscreen is used as the input means, the latch circuit is not turned ON even if the active signal is output from only one component due to the failure of the watchdog IC or the microcomputer A. Therefore, it is possible to implement a safety circuit which does not turn ON the heater or the microwave oven to prevent a dangerous state. Further, without depending on the active signal of the microcomputer A, the watchdog IC independently determines information instructing start of cooking and then outputs the active signal. Consequently, when a user presses down a start key in a state in which the cooking cannot be started, the active signal is not output, whereby it is possible to implement a safer circuit.

### Brief Description of the Drawings

Fig. 1 is a diagram showing a configuration of a heat cooking device according to a first embodiment of the invention;
Fig. 2 is a flowchart for a heat cooking device according to a second embodiment of the invention; and
Fig. 3 is a diagram showing a configuration of a heat cooking device according to the related art.

### Mode for Carrying Out the invention

In order to solve the problem of the related art, a first invention provides a heat cooking device according to claim 1.

With this configuration, in which a touchscreen is used as the input means, a latch circuit is not turned ON even if the active signal is output from only one component due to a failure of the watchdog IC or the microcomputer A. For this reason, a heater or a microwave oven is not turned ON so that a dangerous state can be prevented.

An embodiment according to the invention will be described below with reference to the drawings. The present invention is not limited to the embodiment.

### (First Embodiment)

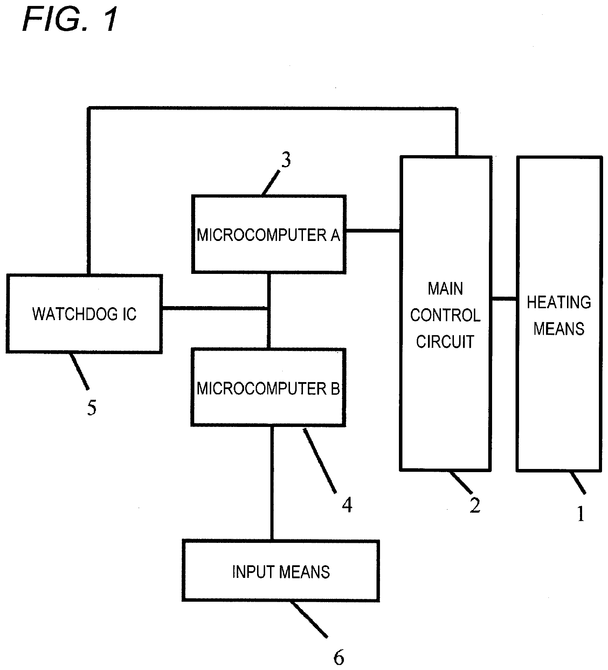

Fig. 1 is a diagram showing a heat cooking device according to a first embodiment of the invention.

In Fig. 1, a microcomputer A 3 controls heating means 1 by using a main control circuit 2. A microcomputer B 4 sets cooking contents based on information input by a touchscreen and transmits cooking start information or cooking type information to the microcomputer A 3 from the microcomputer B 4 by using a communication line. The communication line is used through the microcomputer B 4 to transmit the cooking start information to a watchdog IC 5.

Operation and effect of the heat cooking device having the structure described above will be described below.

At first, when a user sets cooking through input means 6 and presses down a start key displayed on the touchscreen, the microcomputer B 4 transmits information in accordance with a specific format to the microcomputer A 3 and the watchdog IC 5 by using the communication line.

At this time, if determining to receive information instructing start of the cooking from the microcomputer B 4, the microcomputer A 3 outputs a square wave signal as a start OK signal, and the watchdog IC 5 outputs a HIGH signal as the start OK signal.

Consequently, a latch circuit configured by a part of the main control circuit 2 is turned ON. Next, the microcomputer B 4 receives the cooking type information (for example, convection cooking), and the microcomputer A 3 turns ON a corresponding relay based on the information.

At this time, in the case of a sequence for turning ON the heating means 1 (for example, a heater), the microcomputer A 3 outputs a signal for turning ON a heater relay, and the heater is turned ON because the latch circuit of the main control circuit 2 is ON.

Next, if the cooking is ended, the microcomputer B 4 transmits cooking type information of "No Cooking." The microcomputer A 3 turns OFF the corresponding relay based on the information. At this time, the heater relay is also turned OFF. Then, the microcomputer A 3 turns OFF the square wave as the start OK signal and changes the HIGH signal sent from the watchdog IC 5 into a LOW signal. As a result, the latch circuit of the main control circuit 2 is turned OFF.

As described above, in the embodiment, in which the touchscreen is used as an input mean and a display unit, even if the active signal is output from only one component due to the failure of the watchdog IC 5 or the failure of the microcomputer A, the latch circuit is not turned ON. For this reason, the heating means 1 (for example, a heater or a microwave oven) is not turned ON so that a dangerous state can be prevented.

### (Second Embodiment)

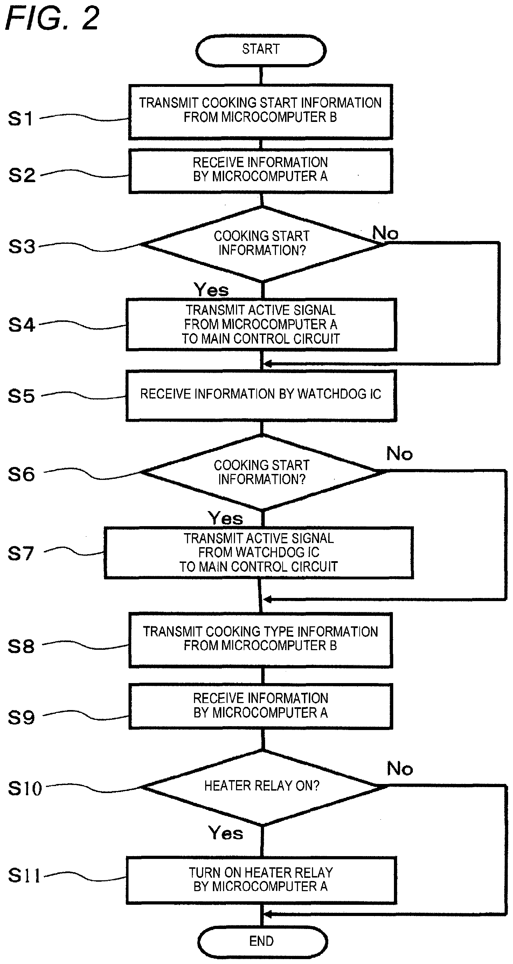

Fig. 2 is a flowchart for a heat cooking device according to a second embodiment of the invention. The same reference numerals as those in the first embodiment indicate the same configurations, and description will be omitted.

At first, a microcomputer B 4 transmits cooking start information to a microcomputer A 3 and a watchdog IC 5 by using a communication line in Step S1.

Next, the microcomputer A 3 receives the information in Step S2, and the microcomputer A 3 determines whether the information is cooking start information in Step S3. If the information is the cooking start information, the microcomputer A 3 transmits a square wave active signal of 4 kHz to the main control circuit 2 in Step S4. A latch circuit of the main control 2 is not turned ON until the square wave active signal and a HIGH active signal from the watchdog IC 5 are input. The latch circuit is not turned ON by only an output of a HIGH or LOW signal from the microcomputer A 3. This is because when the microcomputer A 3 performs an unintended operation, the HIGH or LOW signal is output. Therefore, the latch circuit is configured not to be turned ON.

In Step S5, the watchdog IC 5 receives the cooking start information transmitted by the microcomputer B 4 in the Step S1, and then determines whether the information is the cooking start information in Step S6. If the information is the cooking start information, the watchdog IC 5 transmits a HIGH active signal to the main control circuit 2 in Step S7. If the active signal is output in the Step S4, the latch circuit of the main control circuit 2 is turned ON. If the information is not the cooking start information, the processing proceeds to Step S8.

In Step S8, the microcomputer B 4 transmits cooking type information. In Step S9, the microcomputer A 3 receives the information and turns ON/OFF corresponding relay based on the information. In Step S10, the microcomputer A 3 determines whether a received sequence for the cooking type which is a sequence for turning ON a heater relay. If the sequence is the sequence for turning ON the heater relay, the microcomputer A 3 transmits an active signal to the heater relay in Step S11. If the latch circuit of the main control circuit 2 is ON at this time, a heater is turned ON.

### Industrial Applicability

As described above, in the heat cooking device according to the invention, in which a touchscreen is used as input means, the latch circuit is not turned ON even if the active signal is output from only one component due to the failure of the watchdog IC or the microcomputer A. For this reason, a heater or a microwave oven is not turned ON so that a dangerous state can be prevented. Therefore, in addition to the heat cooking device, the invention is easily applicable to other home electric appliances.

### Description of Reference Signs

- 1: Heating Means
- 2: Main Control Circuit
- 3: Microcomputer A
- 4: Microcomputer B
- 5: Watchdog IC
- 6: Input Means

## Claims

1. heat cooking device comprising:
a heating chamber configured to accommodate an object to be heated;
an opening/closing door provided on the heating chamber;
heating means (1) configured to heat the object to be heated in the heating chamber;
a main control circuit (2) configured to control the heating means (1);
a first microcomputer (3) configured to supply an active signal to the main control circuit (2);
input means (6);
**characterized in that**
the input means (6) consists of a touch-screen with a start key for setting of cooking;
a second microcomputer (4) is configured to receive data from the touch-screen;
a communication line connects the first microcomputer (3) and the second microcomputer (4) to allow communication between them; and
a watchdog IC (5) connected to the communication line,
wherein when cooking setting information is input by the touchscreen, the second microcomputer (4) sets cooking contents and transmits cooking type information to the first microcomputer (3) by using a communication line, and
wherein the second microcomputer (4) is configured to transmit, when data indicating start of cooking is input by the touchscreen, cooking start information to the first microcomputer (3) and the watchdog IC (5) by using the communication line, and the main control circuit (2) is turned ON based on a logical conjunction of an active signal output from the watchdog IC (5) AND an active signal output from the first microcomputer (3).

## Patentansprüche

1. Wärmekochvorrichtung, die Folgendes umfasst:
eine Wärmekammer, die konfiguriert ist, einen zu erwärmenden Gegenstand aufzunehmen;
eine zu öffnende/schließende Tür, die an der Wärmekammer vorgesehen ist;
Heizmittel (1), die konfiguriert sind, den zu erwärmenden Gegenstand in der Wärmekammer zu erwärmen;
eine Hauptsteuereinheit (2), die konfiguriert ist, die Heizmittel (1) zu steuern;
einen ersten Mikrocomputer (3), der konfiguriert ist, der Hauptsteuerschaltung (2) ein aktives Signal zuzuführen; und
Eingabemittel (6);
**dadurch gekennzeichnet, dass**
die Eingabemittel (6) aus einem Berührungsbildschirm mit einer Starttaste zum Einstellen des Kochens bestehen;
ein zweiter Mikrocomputer (4) konfiguriert ist, Daten von dem Berührungsbildschirm zu empfangen;
eine Kommunikationsleitung den ersten Mikrocomputer (3) und den zweiten Mikrocomputer (4) miteinander verbindet, um zwischen ihnen eine Kommunikation zu ermöglichen; und
eine Überwachungs-IC (5), die mit der Kommunikationsleitung verbunden ist,
wobei der zweite Mikrocomputer (4) dann, wenn Kocheinstellinformationen über den Berührungsbildschirm eingegeben werden, Kochinhalte einstellt und Kochartinformationen unter Verwendung einer Kommunikationsleitung an den ersten Mikrocomputer (3) überträgt und
wobei der zweite Mikrocomputer (4) konfiguriert ist, dann, wenn Daten, die den Beginn des Kochens angeben, über den Berührungsbildschirm eingegeben werden, Kochstartinformationen an den ersten Mikrocomputer (3) und die Überwachungs-IC (5) unter Verwendung der Kommunikationsleitung zu übertragen, und die Hauptsteuerschaltung (2) anhand einer logischen Verknüpfung eines aktiven Signals, das von der Überwachungs-IC (5) ausgegeben wird, UND eines aktiven Signals, das von dem ersten Mikrocomputer (3) ausgegeben wird, eingeschaltet wird.

## Revendications

1. Dispositif de cuisson à chaud comprenant :
une chambre de chauffe conçue pour contenir un objet devant être chauffé ;
une porte d'ouverture et de fermeture placée sur la chambre de chauffe ;
un moyen de chauffage (1) conçu pour chauffer l'objet devant être chauffé dans la chambre de chauffe ;
un circuit de commande principal (2) conçu pour commander le moyen de chauffage (1) ;
un premier micro-ordinateur (3) configuré pour fournir un signal actif au circuit de commande principal (2) ;
un moyen d'entrée (6) ;
**caractérisé en ce que**
le moyen d'entrée (6) est constitué d'un écran tactile avec une touche de démarrage pour régler la cuisson ;
un deuxième micro-ordinateur (4) est configuré pour recevoir des données provenant de l'écran tactile ;
une ligne de communication connecte le premier micro-ordinateur (3) et le deuxième micro-ordinateur (4) pour qu'ils puissent communiquer entre eux ; et
un circuit intégré de surveillance (5) connecté à la ligne de communication,
lorsque les informations de réglage de cuisson sont entrées au moyen de l'écran tactile, le deuxième micro-ordinateur (4) réglant le contenu de la cuisson et transmet les informations du type de cuisson au premier micro-ordinateur (3) au moyen de la ligne de communication, et
le deuxième micro-ordinateur (4) étant configuré pour transmettre, lorsque les données indiquant le début de la cuisson sont entrées au moyen de l'écran tactile, les informations de début de cuisson au premier micro-ordinateur (3) et au circuit intégré de surveillance (5) au moyen de la ligne de communication, et le circuit de commande principal (2) étant positionné sur ON en fonction d'une conjonction logique d'une sortie de signal actif depuis le circuit intégré de surveillance (5) ET d'une sortie de signal actif depuis le premier micro-ordinateur (3).
